# EUROPÄISCHE PATENTSCHRIFT

(11) **EP 1 216 610 B1**
(45) Veröffentlichungstag und Bekanntmachung des Hinweises auf die Patenterteilung: **03.11.2004**
(21) Anmeldenummer: 01129461.8
(22) Anmeldetag: 11.12.2001
(51) Int. Cl.: A01C 17/00, A01C 15/12

(54) **Düngerstreuer**
Fertilizer spreader
Epandeur d'engrais

(30) Priorität: 15.12.2000 DE 10062678
(43) Veröffentlichungstag der Anmeldung: 26.06.2002
(73) Patentinhaber: Amazonen-Werke H. Dreyer GmbH & Co. KG, 49205 Hasbergen (DE)
(72) Erfinder: Gattermann, Bernd, Dr., 49205 Hasbergen (DE); Walter, Achim, 49078 Osnabrück (DE); Marquering, Johannes, 49176 Borgloh (DE); Lührmann, Johannes, 49134 Wallenhorst (DE)

(56) Entgegenhaltungen:
- EP-A- 0 181 308
- EP-A- 0 383 071
- US-A- 4 277 022
- US-A- 6 000 577

## Beschreibung

Die Erfindung betrifft einen Düngerstreuer gemäß des Oberbegriffes des Patentanspruches 1.

Ein derartiger Düngerstreuer ist durch die EP 03 83 071 B1 bekannt. Bei diesem Düngerstreuer wird das Material aus dem Vorratsbehälter mittels eines Förderbandes über eine mittels eines Schiebers einstellbare Durchtrittsöffnung, einem Zwischenbehälter zugefördert. Dem Zwischenbehälter ist zumindest eine Dosiereinheit zugeordnet, über welche das sich im Zwischenbehälter befindliche Material in einstellbaren Mengen einer als Zentrifugalstreuwerk ausgebildeten Verteileinrichtung zugeführt wird. Um eine ununterbrochene gleichmäßige Materialausbringung über die Verteileinrichtung zu gewährleisten, muss immer sichergestellt sein, dass sich genügend Material im Zwischenbehälter befindet. Um dieses zu erreichen muss beim Düngerstreuer gemäß dem Stand der Technik die Zuförderung des Materials über das Förderband in den Zwischenbehälter über den Schieber so eingestellt sein, dass sie auf die maximal eingestellte Ausbringmenge, die über die Dosiereinrichtung der Verteileinrichtung zugeführt wird, abgestimmt ist. Dies bedeutet, dass immer mehr Material von dem Förderband in den Zwischenbehälter gefördert wird, als an sich von der Dosiereinrichtung der Verteileinrichtung zugeführt wird. Hierdurch kommt es zu einem nachteiligen Stau innerhalb des Zwischenbehälters, d.h., dass das Förderband mehr Material in den Zwischenbehälter hindrückt als ausgebracht wird. Hierdurch wird die von der Dosiereinrichtung der Verteileinrichtung zu dosierte Materialmenge verfälscht, so dass letztendlich nicht die gewünschte Materialmenge ausgebracht wird.

Der Erfindung liegt die Aufgabe zugrunde, einen Großflächendüngerstreuer gemäß der eingangs beschriebenen Gattung derart weiterzubilden, dass eine kontinuierliche und gleichmäßige Zuführung des Düngers für alle möglichen Ausbringmengen gewährleistet ist.

Diese Aufgabe wird erfindungsgemäß durch die kennzeichnenden Merkmale des Patentanspruches 1 gelöst. Infolge dieser Maßnahmen wird sichergestellt, dass der Zwischenbehälter immer mit ausreichend Materialvorrat gefüllt ist, jedoch nicht überfüllt wird.

Um in einfacher Weise das Förderorgan des Vorratsbehälters antreiben zu können, ist vorgesehen, dass das Antriebselement als hydraulischer Antriebsmotor ausgebildet ist.

In einer Ausführungsform ist vorgesehen, dass die Messeinrichtung zwei Füllstandssensoren aufweist, wobei der eine Füllstandssensor den maximalen Füllungsgrad des Zwischenbehälters überwacht und der weitere Füllstandssensor den minimalen Befüllungsgrad des Zwischenbehälters überwacht, und dass bei erreichen des minimalen Befüllungsgrades das Antriebselement eingeschaltet und bei erreichen des maximalen Befüllungsstandes über die Abschalteinrichtung abgeschaltet wird. Über diese beiden Füllstandssensoren wird also gewährleistet, dass sich weder zu wenig noch zu viel Material im Vorratsbehälter befindet. Hierbei kann vorgesehen sein, dass die Füllstandssensor als zumindest ein berührungsloser Sensor, wie beispielsweise Ultraschallsensor, Infrarot- oder Lasersensor ausgebildet sind.

Es ist auch möglich, dass im oberen Bereich des Zwischenbehälters ein Füllstandsmessgerät angeordnet ist, welches ein um eine parallel zur Antriebsachse des Förderorgans verlaufende Schwenkachse aufgehängtes Schwenkelement aufweist, dass dieses Schwenkelement über ein Verbindungselement mit dem als Hydraulikventil ausgebildeten Abschalteinrichtung in Verbindung steht, welches den Hydraulikmotor zu- oder abschaltet. Hierdurch wird eine einfache mechanische Füllstandsmesseinrichtung geschaffen, welche mittels Übertragungselemente auf ein dem Hydraulikmotor zugeordnetem Hydraulikventil einwirkt. Diese Ausführung zeichnet sich durch eine äußerst robuste und einfache Ausbildung aus.

Weitere Einzelheiten der Erfindung sind den übrigen Unteransprüchen, der Beispielsbeschreibung und den Zeichnungen zu entnehmen. Die Zeichnungen zeigen
- Fig. 1: den Großflächendüngerstreuer in der Ansicht von hinten,
- Fig. 2: den Großflächendüngerstreuer in der Seitenansicht, Teilansicht und in Prinzipdarstellung,
- Fig. 3: einen Hydraulikschaltplan für den Streuer gemäß Fig. 1 und 2,
- Fig. 4: die Dosiereinheit in der Ansicht IV - IV,
- Fig. 5: einen weiteren Großflächendüngerstreuer in der Darstellungsweise gemäß Fig. 2,
- Fig. 6: ein Diagramm über die Regelung der Fördergeschwindigkeit bzw. Fördermenge des Förderbandes und
- Fig. 7: einen weiteren Großflächenstreuer in der Darstellung gemäß Fig. 2.

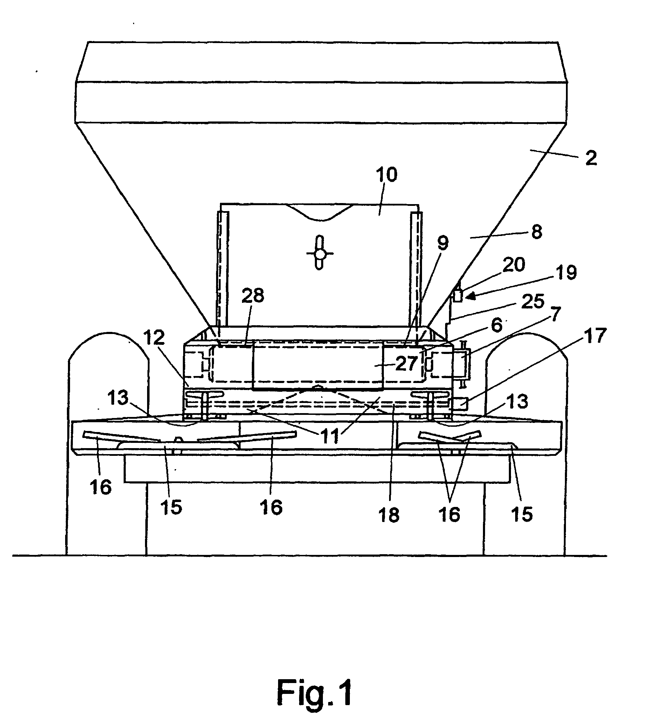

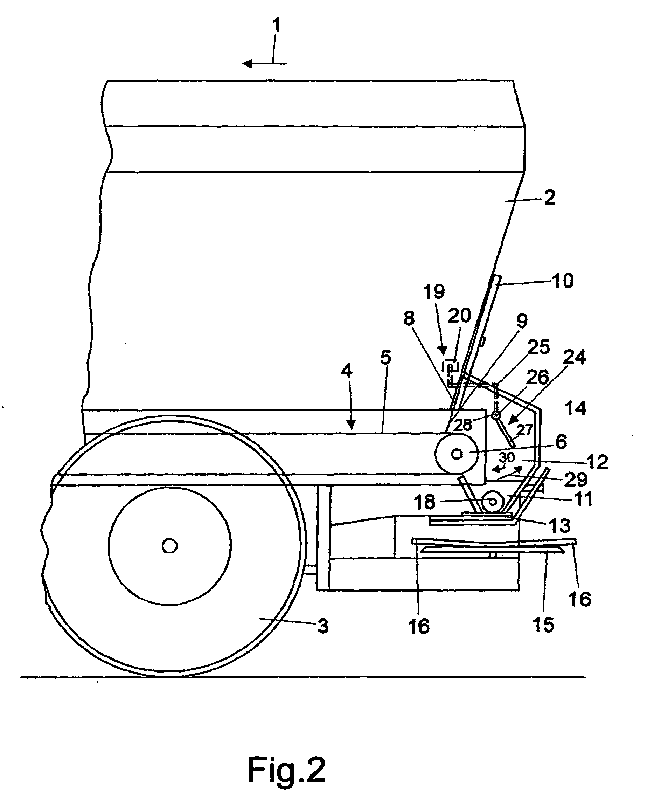

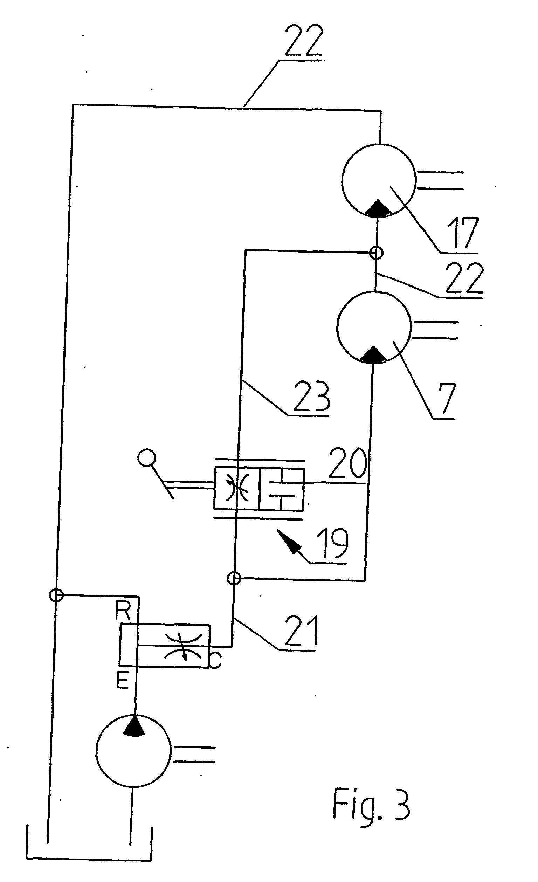

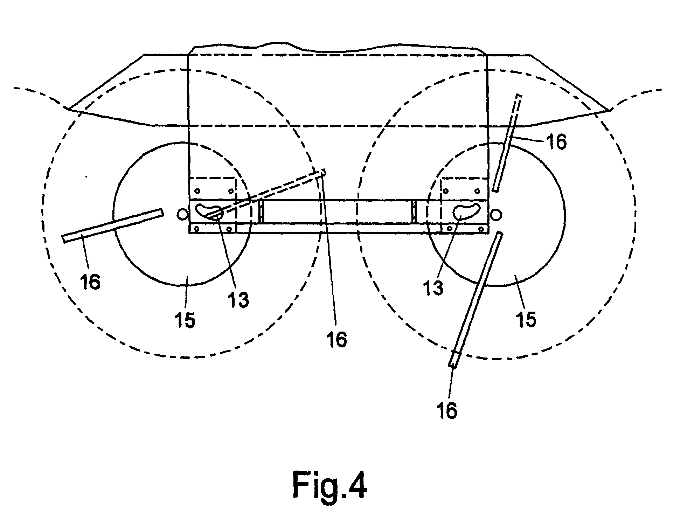

Der Großflächendüngerstreuer gemäß Fig. 1 bis 4 weist den in Fahrtrichtung 1 langgestreckten Vorratsbehälter 2 mit dem darunter angeordneten Fahrwerk 3 auf. In dem unteren Bereich des Vorratsbehälters 2 befindet sich das Förderorgan 4, welches als umlaufendes Gummiband 5 ausgebildet ist und von einer vorderen, nicht näher dargestellten Umlenkrolle und der hinteren Antriebsrolle 6 gehalten wird. Die hintere Antriebsrolle wird von dem Hydraulikmotor 7, der mit einem Ölmotor oder der Hydraulikanlage des den Großflächendüngerstreuer ziehenden Schleppers verbunden ist, angetrieben, so dass mit Hilfe des Gummibandes 5 die sich im Vorratsbehälter 3 befindlichen Düngemittel zum hinteren Ende des Vorratsbehälters 2 gefördert werden. In der Rückwand 8 des Vorratsbehälters ist im unteren Bereich und oberhalb des Gummibandes 5 die Auslauföffnung 9 angeordnet, welche in ihrer Größe durch einen Schieber 10 einstellbar sein kann. Am hinteren Ende des Gummibandes 5 sind hinter und unter diesem die Zulauftrichter 11 eines Zwischenbehälters 12 angeordnet. Die Zulauftrichter 11 weisen jeweils eine einstellbare Dosiereinheit 13 auf. Die hintere Wand 14 des Zwischenbehälters 12 erstreckt sich bis oberhalb des Förderbandes 5. Über die Dosiereinheit 13 wird jeweils das von dem Förderband 5 den Zulauftrichtern 11 zugeförderte Material in einstellbarer Weise den rotierend angetriebenen Schleuderscheiben 15, die unterhalb der Dosiereinheiten 13 angeordnet sind, zugeführt. Auf den Schleuderscheiben 15 sind die Wurfschaufeln 16 angeordnet, mittels denen das Material in Breitverteilung auf der Bodenoberfläche verteilt wird. Oberhalb der Dosiereinheit 13 ist in den Zulauftrichtern 11 des Zwischenbehälters 12 die mittels des Hydraulikmotors 17 angetriebene Rühreinrichtung 18 angeordnet.

Dem Hydraulikmotor 7 ist eine Abschalteinrichtung 19 in Form eines Hydraulikventils 20 angeordnet. Von der Hydraulikanlage führt eine Druckleitung 21 zu dem Hydraulikmotor 7. Die Rücklaufleitung 22 des Hydraulikmotors 7 ist an die Hydraulikanlage angeschlossen. Zwischen der zu dem Hydraulikmotor 7 führenden Druckleitung 21 und der Rücklaufleitung 22 ist eine parallele Leitung 23 angeordnet, in welcher das Hydraulikventil 20 angeordnet ist. In der von dem Hydraulikmotor 7 zu der Hydraulikanlage führenden Rücklaufleitung 22 kann noch ein weiterer, das den Zulauftrichtern 11 zugeordnete Rührwerk 18 antreibende Hydraulikmotor 17 angeordnet sein. Im oberen Bereich des Zwischenbehälters 12 ist eine Füllstandsmesseinrichtung 24 angeordnet, mittels welcher das Hydraulikventil 20 über Übertragungsmittel 25 betätigbar ist. Bei dem Ausführungsbeispiel gemäß Fig. 1 bis 4 weist die Füllstandsmesseinrichtung 24 ein um eine parallel zur Antriebsachse 25 des Förderbandes 5 verlaufende Schwenkachse 26 aufgehängtes Schwenkelement 27 auf. Dieses Schwenkelement 27 ist über die Schwenkwelle 28 mittels der Übertragungsmittel 25 mit der als Hydraulikventil 20 ausgebildeten Abschalteinrichtung 19 verbunden, welches den Hydraulikmotor 7 zu- oder abschaltet.

Es ist auch möglich, das Abschaltventil als Umschaltventil auszubilden und in der Druckleitung 21 anzuordnen und das Umschaltventil dann mit der Rücklaufleitung 22 zu verbinden.

Die Funktionsweise der Abschalteinrichtung 19 gemäß den Fig. 1 bis 4 ist folgende:

Wenn sich zu wenig Material in dem Zwischenbehälter 12 befindet, hängt das Schwenkelement 27 nach unten und das Umschaltventil 20 ist so geschaltet, dass der Hydraulikmotor 7 das Band 5 mit der vorgesehenen Drehzahl anschaltet. Wenn der Zwischenbehälter 12 mit Material füllt, hebt das Material das Schwenkelement 27 an und das Schwenkelement 27 schwenkt um die Schwenkachse 26 in Pfeilrichtung 29 und betätigt somit das Hydraulikventil 20. Wenn die eingestellte maximale Füllhöhe erreicht ist, wird der Hydraulikmotor 7 über das Hydraulikventil 20 abgeschaltet. Das Hydraulikventil 20 kann als einstellbarer Mengenregler ausgebildet sein, so dass ein kontinuierlicher Übergang zwischen zu- und abschalten des Hydraulikmotors 7 und umgedreht möglich ist. Wenn sich zu wenige Material im Zwischenbehälter 12 befindet, bzw. der Füllstand absinkt, schwenkt das Schwenkelement 27 in Pfeilrichtung 30 und betätigt entsprechend das Hydraulikventil 20, so dass der Hydraulikmotor 7, der das Förderband 5 antreibt, zugeschaltet wird bzw. mehr Hydrauliköl zu dem Hydraulikmotor 7 zulässt, so dass der Hydraulikmotor 7 mit einer höheren Drehzahl angetrieben wird.

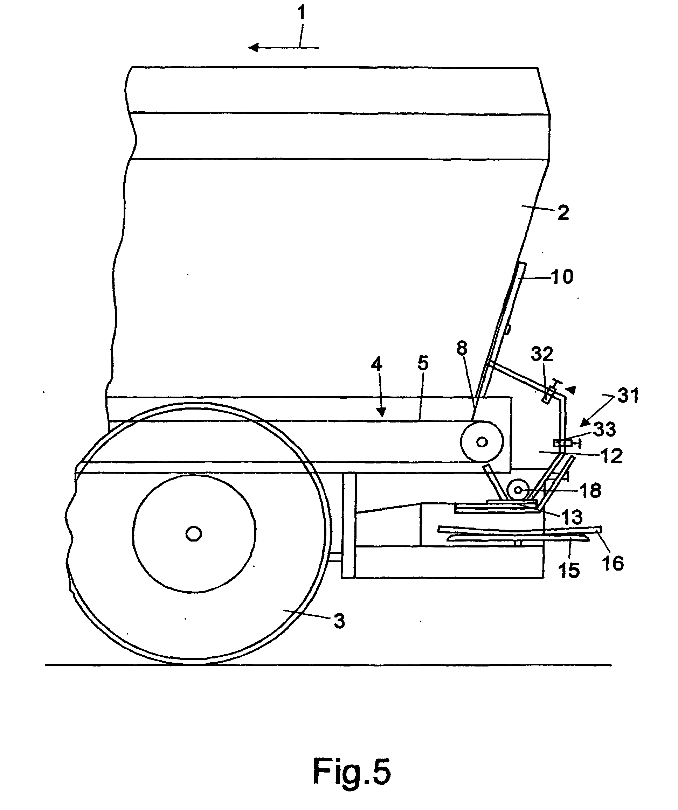

Bei dem Ausführungsbeispiel gemäß der Fig. 5 ist die mechanische Füllstandsmessung durch eine berührungslose Füllstandsmesseinrichtung 31 ersetzt. Diese Messeinrichtung 31 weist die beiden Füllstandssensoren 32 und 33 auf, wobei der Füllstandssensor 32 den maximalen Füllungsgrad des Zwischenbehälters 12 überwacht und der Füllstandssensor 33 den minimalen Füllungsgrad des Zwischenbehälters 12 überwacht. Bei erreichen des minimalen Befüllungsgrades wird das Antriebeselement für das Förderband 5 eingeschaltet und bei erreichen des maximalen Befüllungsgrades über die Abschalteinrichtung abgeschaltet. Diese Sensoren 32 und 33 können als berührungslose Sensoren, beispielsweise Ultraschall, Infrarot oder Lasersensor ausgebildet sein.

Die Funktionsweise dieser Füllstandssensoren 32 und 33 in Richtung ist folgende:

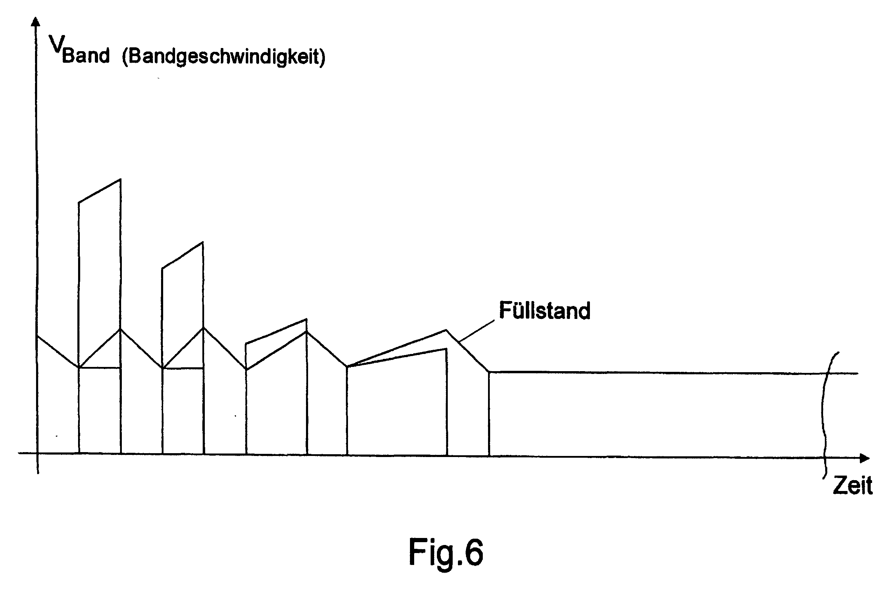

Die Sensoren 32 und 33 sind mit einer elektrischen oder elektronischen Steuer- bzw. Regeleinrichtung verbunden, die über ein Hydraulikventil den Hydraulikmotor für den Antrieb des Förderbandes 5 zu- oder abschaltet. Wenn der die minimale Befüllungshöhe überwachende Sensor 33 feststellt, dass der minimale Befüllungsgrad unterschritten wird, wird ein entsprechendes Signal an die Steuer- und Regeleinrichtung angegeben, die entsprechend das Hydraulikventil ansteuert, so dass der Hydraulikmotor das Förderband 5 entsprechend antreibt und entsprechend Material in den Zwischenbehälter 12 fördert. Falls dann der den maximalen Füllstand überwachende Füllstandssensor 32 feststellt, dass der maximale Füllstand erreicht wird, gibt dieser Sensor ein Signal an die Steuereinrichtung ab, die dann das Hydraulikventil entsprechend ansteuert, so dass der Hydraulikmotor für den Antrieb des Förderbandes 5 angesteuert wird. In der Steuerund Regeleinrichtung kann eine entsprechende Funktion abgelegt sein, wie dies Fig. 6 zeigt, dass im Laufe der Zeit entsprechend der Zu- und Abschaltzyklen des Hydraulikmotors die Bandgeschwindigkeit des Förderbandes 5 durch einen entsprechenden Antrieb die Hydraulikmotor so eingeregelt wird, dass eine möglichst gleichmäßige Förderung des Materiales über das Förderband 5 in den Zwischenbehälter 12 und somit einen gleichmäßigen Antrieb des Förderbandes 5 über den Hydraulikmotor sichergestellt wird. Hierbei lässt sich die Bandgeschwindigkeit über die elektronischen Steuer- und Regeleinrichtungen entsprechend der Darstellungsweise in Fig. 6 auch auf den unterschiedlichen Öffnungsquerschnitt der Dosiereinheit, d.a. die Ausbringmenge entsprechend einregeln. In der als Steuer- und Regeleinrichtung ausgebildeten Rechner wird eine entsprechende Kurve oder eine Kurvenschar hinterlegt. Hierbei kann der ausgebrachte Volumenstrom berücksichtigt werden, da das spezifische Gewicht von Düngersorte zu Düngersorte unterschiedlich ist. Das Ziel ist es, das Förderband über den Antriebsmotor 7 so anzutreiben, dass das Förderband nach einer gewissen Einlaufphase so eingeregelt wird, dass es kontinuierlich umläuft und nicht ständig zu- und abgeschaltet wird. Hierbei kann die in der Streuer- und Regeleinrichtung hinterlegten Kurve so ausgelegt sein, dass durch die Kurve die Düngersorte und das spezifische Gewicht vorgegeben bzw. berücksichtigt werden. Es ist jedoch auch möglich, die Kurve so auszulegen, dass über die hinterlegte Kurve nach Füllstand und Zu- und Abschaltzyklen die Fördergeschwindigkeit des Förderbandes eingeregelt wird.

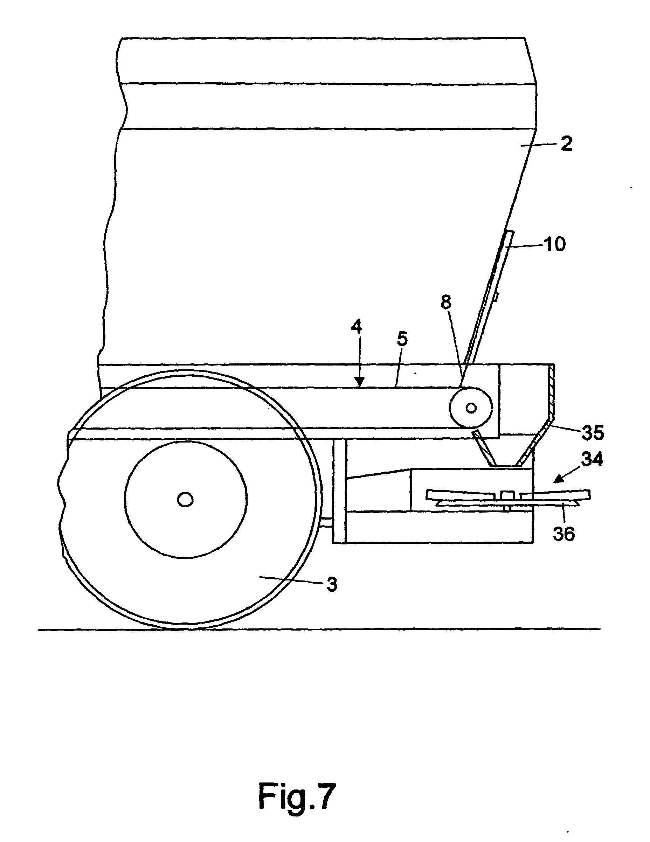

Die Fig. 7 zeigt den Großflächendüngersteuer gemäß den Fig.1 bis 5, wobei ein robustes Streuwerk 34 zur Ausbringung von Grunddünger, beispielsweise Kalk etc. an Stelle der Dosierund Streueinheit gemäß den Fig. 1 und 5 angeordnet ist. Bei dieser Ausführung erfolgt die Einstellung der Ausbringmenge durch die Stellung des Schiebers 10 und das Material wird über die Zulaufrutschen 35 , die auf ihrer Unterseite keine einstellbare Dosiereinheit aufweisen, direkt den Schleuderscheiben 36, auf welchen die Wurfschaufeln 37 angeordnet sind, zugeführt. Es wird also hier der Zwischenbehälter 12 mit den Zulauftrichtern 11 und der Dosiereinheit 13 und den Schleuderscheiben 15 gegen die Zulaufrutschen 35 und die Schleuderscheiben 36 ausgetauscht. Hierbei kann die Verbindung zwischen dem Düngerstreuer und dem Zulauftrichter 12 und der die Schleuderscheiben 15 tragenden Einheit als Schnellverschluss ausgebildet sein, so dass der Zwischenbehälter 12 der die Schleuderscheiben 15 tragenden Einheit schnell gegen die Zulaufrutschen 35 und die Schleuderscheiben 36 tragenden Einheit ausgetauscht werden kann.

Es ist auch möglich, an Stelle die die Schleuderscheiben tragenden Einheit auszutauschen nur die Schleuderscheiben mit den zugehörigen Wurfschaufeln auszuwechseln. Es ist dann lediglich nur der Zulauftrichter mit der Dosiereinheit gegen die Zulaufrutschen auszuwechseln.

Somit kann über dieses Schnellwechselsystem der Düngerstreuer in einfacher Weise auf die auszubringende Düngersorten und die Düngungsart in einfacher Weise umgestellt werden.

## Patentansprüche

1. Düngerstreuer mit einem langgestreckten Vorratsbehälter und einem eigenen Fahrwerk und einem in dem unteren Bereich des Vorratsbehälters angeordneten mittels eines Antriebselementes angetriebenen Förderorgan, welches die im Vorratsbehälter befindlichen Düngemittel zu einem an dem hinteren Ende des Vorratsbehälters angeordneten Zentrifugalstreuwerk mit zumindest zwei um aufrechte Achsen rotierend angetriebenen Schleuderscheiben mit Wurfschaufeln in einstellbaren Mengen fördert, von welchem die Düngemittel in Breitverteilung auf der Bodenoberfläche verteilt werden, wobei die Düngemittel über zwischen dem Förderorgan und den Schleuderscheiben angeordneten, Zulauftrichtern aufweisenden Zwischenbehälter zugeführt werden, wobei die Zulauftrichter jeweils zumindest eine einstellbare Dosiereinheit aufweisen, und wobei die hintere Wand des Zwischenbehälters sich zumindest annähernd bis oberhalb des Förderbandes erstreckt, **dadurch gekennzeichnet, dass** das Antriebselement des Förderorgans (4,5) eine Abschalteinrichtung (20) aufweist, dass in dem Zwischenbehälter (12) zumindest eine Füllstandsmesseinrichtung (24,31) angeordnet ist, dass mittels der Füllstandsmesseinrichtung (24,31) das Antriebselement (7) über Abschalteinrichtung (20) abschaltbar und/oder zuschaltbar ist.

2. Düngerstreuer nach Anspruch 1, **dadurch gekennzeichnet, dass** das Antriebselement als hydraulischer Antriebsmotor (7) ausgebildet ist.

3. Düngerstreuer nach einem oder mehreren der vorstehenden Ansprüche, **dadurch gekennzeichnet, dass** die Messeinrichtung (31) zwei Füllstandssensoren (32,33) aufweist, wobei der eine Füllstandssensor (32) den maximalen Füllungsgrad des Zwischenbehälters (12) überwacht und der weitere Füllstandssensor (33) den minimalen Befüllungsgrad des Zwischenbehälters (12) überwacht, und dass bei Erreichen des minimalen Befüllungsgrades das Antriebselement (20) eingeschaltet und bei Erreichen des maximalen Befüllungsstandes über die Abschalteinrichtung (20) abgeschaltet wird.

4. Düngerstreuer nach Anspruch 1, **dadurch gekennzeichnet, dass** die Füllstandsmesseinrichtung (31,32,33) als zumindest einen berührungslosen Sensor, beispielsweise Ultraschall-, Infrarot-, Lasersensor etc. ausgebildet.

5. Düngerstreuer nach Anspruch 1, **dadurch gekennzeichnet, dass** im oberen Bereich des Zwischenbehälters (12) ein Füllstandsmessgerät (24)angeordnet ist, welches ein um eine parallel zur Antriebsachse des Förderorgans (5) verlaufende Schwenkachse (26) aufgehängtes Schwenkelement (27) aufweist, dass dieses Schwenkelement (27) über ein Verbindungselement (25) mit dem als Hydraulikventil (20) ausgebildeten Abschalteinrichtung in Verbindung steht, welches den Hydraulikmotor (7) zu- oder abschaltet.

6. Düngerstreuer nach Anspruch 5, **dadurch gekennzeichnet, dass** in der zu dem Hydraulikmotor (7) führenden Druckleitung (21) eine Abzweigleitung (23) angeschlossen ist, welche zu der Rücklaufleitung (22) führt, und dass in der Abzweigleitung (22) das Hydraulikventil (20) angeordnet ist.

7. Düngerstreuer nach Anspruch 5 **dadurch gekennzeichnet, dass** in der Druckleitung ein Umschaltventil angeordnet ist, dass an dem Umschaltventil eine Rücklaufleitung angeschlossen ist.

## Claims

1. Fertiliser broadcaster having an elongated hopper, its own framework and a conveying member, which is disposed in the lower region of the hopper, is driven by means of a drive member and conveys the fertiliser material, which is situated in the hopper, in adjustable amounts to a centrifugal broadcasting mechanism, which is disposed at the rear end of the hopper and has at least two centrifugal discs with throwing vanes, said centrifugal discs being rotatably driven about vertical axes, fertiliser material being distributed over a wide width on the ground by said centrifugal broadcasting mechanism, wherein the fertiliser material is supplied via an intermediate container, which has supply funnels and is disposed between the conveying member and the centrifugal discs, wherein the supply funnels each have at least one adjustable dosing unit, and wherein the rear wall of the intermediate container extends at least approximately as far as above the conveyor belt,
**characterised**
**in that**, the drive member of the conveying member (4, 5) has a switching-off device (20), in that at least one level measuring device (24, 31) is disposed in the intermediate container (12), in that by means of the level measuring device (24, 31) the drive member (7) is switchable-off and/or switchable-on via switching-off device (20).

2. Fertiliser broadcaster according to claim 1, **characterised in that** the drive member is an hydraulic drive motor (7).

3. Fertiliser broadcaster according to one or more of the preceding claims, **characterised in that** the measuring device (31) has two level sensors (32, 33), the one level sensor (32) monitoring the maximum level of the intermediate container (12) and the other level sensor (33) monitoring the minimum level of the intermediate container (12), and **in that** when the minimum level is obtained the drive member (20) is switched-on and when the maximum level is obtained is switched-off via the switching-off device (20).

4. Fertiliser broadcaster according to claim 1, **characterised in that** the level measuring sensor (21, 32, 33) is in the form of at least one noncontact sensor, for example an ultrasound, infrared or laser sensor etc.

5. Fertiliser broadcaster according to claim 1, **characterised in that** in the upper region of the intermediate container (12) there is disposed a level measuring apparatus (24), which has a pivoting member (27) which is suspended about a pivotal axis (26), which extends parallel to the driving axis of the conveying member (5), and **in that** this pivoting member (27) is connected via a connecting member (25) to the switching-off device, which is in the form of an hydraulic valve (20), which switches-on or switches-off the hydraulic motor (7).

6. Fertiliser broadcaster according to claim 5, **characterised in that** a branch line (23), which leads to the return line (22), is connected in the pressure line (21) leading to the hydraulic motor (7), and **in that** the hydraulic valve (20) is disposed in the branch line (22).

7. Fertiliser broadcaster according to claim 5, **characterised in that** a changeover valve is disposed in the pressure line, and **in that** a return line is connected to the changeover valve.

## Revendications

1. Epandeur d'engrais comportant un réservoir allongé et son propre châssis ainsi qu'un organe de transfert installé dans la zone inférieure du réservoir d'alimentation et entraîné par un élément d'entraînement, cet organe de transfert transportant l'engrais du réservoir vers un mécanisme d'épandage centrifuge installé à l'extrémité arrière du réservoir d'alimentation et ayant au moins deux disques d'épandage équipés de palettes d'éjection, ces disques tournant autour d'axes verticaux, pour transférer les produits en quantité réglable, ces disques répartissant l'engrais suivant un épandage large à la surface du sol,
l'engrais étant fourni par des réservoirs intermédiaires installés entre l'organe de transfert et les disques d'épandage et comportant des trémies d'alimentation,
les trémies d'alimentation comportant chaque fois au moins une unité de dosage réglable, et
la paroi arrière du réservoir intermédiaire s'étend au moins jusqu'approximativement au-dessus de la bande transporteuse,
**caractérisé en ce que**
l'élément d'entraînement de l'organe de transfert (4, 5) comporte une installation de coupure (20) ;
le réservoir intermédiaire (12) comporte au moins une installation de mesure de niveau de remplissage (24, 31) ; et
l'installation de mesure de niveau de remplissage (24, 34) permet de brancher ou de couper l'élément d'entraînement (7) par une installation de commutation 20.

2. Epandeur d'engrais selon la revendication 1,
**caractérisé en ce que**
l'élément d'entraînement est constitué par un moteur hydraulique (7).

3. Epandeur d'engrais selon l'une ou plusieurs des revendications précédentes,
**caractérisé en ce que**
l'installation de mesure (31) comporte deux capteurs de niveau de remplissage (32, 33) ;
l'un des capteurs de niveau de remplissage (32) surveillant le niveau de remplissage maximum du réservoir intermédiaire (12) et l'autre capteur de niveau de remplissage (33) surveillant le niveau de remplissage minimum du réservoir intermédiaire (12) ; et
lorsqu'on atteint le niveau de remplissage minimum, l'élément d'entraînement (7) est mis en oeuvre alors qu'il est coupé lorsqu'on atteint le niveau de remplissage maximum, par l'intermédiaire de l'installation de commutation (20).

4. Epandeur d'engrais selon la revendication 1,
**caractérisé en ce que**
l'installation de mesure du niveau de remplissage (31, 32, 33) est réalisée au moins sous la forme d'un capteur sans contact par exemple d'un capteur à ultrasons, d'un capteur à infrarouge, d'un capteur laser.

5. Epandeur d'engrais selon la revendication 1,
**caractérisé par**
un appareil de mesure de niveau de remplissage (24) installé dans la zone supérieure du réservoir intermédiaire (12), cet appareil ayant un élément basculant (27) suspendu à un axe de basculement (26) parallèle à l'axe d'entraînement de l'organe de transfert (5) ;
cet élément basculant (27) étant relié par un élément de liaison (25) à l'installation de commutation réalisée sous la forme d'un distributeur hydraulique (20), cette installation de commutation coupant ou branchant le moteur hydraulique (7).

6. Epandeur d'engrais selon la revendication 5,
**caractérisé en ce que**
la conduite de pression (21) reliée au moteur hydraulique (7) comporte une conduite de dérivation (23) reliée à la conduite de retour (22) et la conduite de dérivation (23) est équipée du distributeur hydraulique (20).

7. Epandeur d'engrais selon la revendication 5,
**caractérisé en ce que**
la conduite de pression comporte une soupape de commutation à laquelle est reliée une conduite de retour.
